# EUROPÄISCHE PATENTSCHRIFT

(11) **EP 1 454 706 B1**
(45) Veröffentlichungstag und Bekanntmachung des Hinweises auf die Patenterteilung: **07.01.2009**
(21) Anmeldenummer: 04013767.1
(22) Anmeldetag: 25.05.2000
(51) Int. Cl.: B23K 35/34, B23K 35/363, C23C 20/02

(54) **Mit Aluminium-Silicium-Legierung beschichtete Bauteile**
Components coated with an aluminium-silicon alloy
Composants revêtus d'un alliage aluminium-silicium

(30) Priorität: 02.06.1999 DE 19925301
(43) Veröffentlichungstag der Anmeldung: 08.09.2004
(62) Teilanmeldung aus: 00943738.5
(73) Patentinhaber: Solvay Fluor GmbH, 30173 Hannover (DE)
(72) Erfinder: Seseke-Koyro, Ulrich, Dr., 30916 Isernhagen (DE); Frehse, Joachim, 30625 Hannover (DE); Becker, Andreas, 29331 Lachendorf (DE)
(74) Vertreter: Jacques, Philippe

(56) Entgegenhaltungen:
- GB-A- 2 339 161
- US-A- 4 906 307
- PATENT ABSTRACTS OF JAPAN Bd. 0121, Nr. 97 (M-706), 8. Juni 1988 (1988-06-08) & JP 63 002590 A (NIPPON RADIATOR CO LTD), 7. Januar 1988 (1988-01-07)
- PATENT ABSTRACTS OF JAPAN Bd. 1997, Nr. 02, 28. Februar 1997 (1997-02-28) & JP 8 267229 A (KAWAKATSU ICHIRO), 15. Oktober 1996 (1996-10-15)
- PATENT ABSTRACTS OF JAPAN Bd. 0163, Nr. 02 (M-1275), 3. Juli 1992 (1992-07-03) & JP 4 084691 A (CALSONIC CORP), 17. März 1992 (1992-03-17)

## Beschreibung

Die Erfindung bezieht sich auf ein Verfahren zur Herstellung von Bauteilen aus Aluminium oder Aluminiumlegierungen, die mit Alkalimetallhexafluorsilikat beschichtet sind.

Techniken zum Verlöten von Bauteilen aus Aluminium oder Aluminiumlegierungen sind bekannt. Die Bauteile werden unter Zuhilfenahme eines Lotmetalls und eines Flußmittels unter Erhitzen miteinander verbunden. Dabei kann man das Lotmetall entweder separat zusetzen oder man kann mit Lotmetall plattierte Bauteile einsetzen. Als Flußmittel werden bevorzugt Kaliumfluoraluminate und/oder Cäsiumfluoraluminate eingesetzt.

Das US-Patent 4,906,307 offenbart ein Verfahren zum Verlöten von Bauteilen aus Aluminiumlegierung. Dabei werden lotplattierte Bauteile mit einem Flußmittel aus 70 bis 90 Gew.-% Kaliumhexafluorsilikat und 30 bis 10 Gew.-% Aluminiumtrifluorid, unter Zusatz von Lithiumfluorid und Natriumfluorid eingesetzt. Die europäische Patentanmeldung EP-A-0 810 057 offenbart Flußmittel zum Aluminiumlöten, die bis zu 20 Gew.-% eines Metallfluorsilikats (neben einem Fluoraluminatkomplex, beispielsweise Kaliumtetrafluoraluminat) aufweisen können. Mit bestimmten Alkalimetallfluorsilikaten in bestimmten Gewichtsbereichen ist auch lotfreies Löten möglich.

Die deutsche Patentanmeldung 196 36 897 offenbart, daß man Aluminiumbauteile lotfrei miteinander verlöten kann, sofern man ein Flußmittel verwendet, welches 6 bis 50 Gew.-% Kaliumhexafluorsilikat und weiterhin Kaliumfluoraluminat enthält.

Die Japanische Offenlegungsschrift JP-A 63-002590 offenbart ein Verfahren zum Verlöten von Aluminiumbauteilen. Dabei wird gemäß einer Ausführungsform eine Beschichtung von 100 Gew.-% K₂SiF₆ auf die Bauteile aufgebracht. Das Flächengewicht, mit welchem das K₂SiF₆ auf die Bauteile aufgebracht ist, wird mit 5 bis 20 g/m² angegeben.
Aufgabe der vorliegenden Erfindung ist es, ein Verfahren zur Herstellung von Bauteilen aus Aluminium oder Aluminiumlegierungen anzugeben, ohne daß eine Plattierung durch Aufwalzen eines Lotmetalls notwendig wäre. Die nach dem erfindungsgemäßen Verfahren hergestellten Bauteile aus Aluminium oder Aluminiumlegierungen eignen sich zum Verlöten, wobei der separate Zusatz eines Lotmetalls nicht notwendig ist. Diese Aufgabe wird durch das erfindungsgemäße Verfahren gelöst.

Das erfindungsgemäße Verfahren ist in den Patentansprüchen angegeben.

Bevorzugte Alkalimetallhexafluorsilikate sind Kaliumhexafluorsilikat, Cäsiumhexafluorsilikat oder deren Gemische, ganz besonders Kaliumhexafluorsilikat.

Das Alkalimetallfluorsilikat wird mit einem Flächengewicht von 30 bis 60 g/m² aufgebracht. Dies kann beispielsweise durch elektrostatische Aufbringung des trockenen Hexafluorsilikat-Pulvers oder aus wäßriger Phase (Lösung oder Suspension des Silikats) erfolgen. Bei geringeren Flächengewichten ergibt sich eine dünnere, bei höheren Flächengewichten eine dickere Legierungsschicht.

Dabei wird es in Form einer Aufschlämmung in Wasser oder in organischen Lösungsmitteln oder auch als Paste auf die verbindenden Werkstoffe aufgebracht. Diese Aufschlämmungen enthalten zweckmäßig 15 bis 75 Gew.-% des Hexafluorsilikats. Außer Wasser werden auch organische Flüssigkeiten, insbesondere Alkohole, wie Methanol, Äthanol, Propanol oder Isopropanol, oder Polyole eingesetzt. Andere organische Flüssigkeiten, die verwendet werden können, sind Äther, z.B. Diäthylenglykolmonobutyläther, Ketone wie Aceton, Ester von einbasigen Alkoholen, Diolen oder Polyolen. Binder für die Anwendung als Paste ist beispielsweise Ethylcellulose. Mittels Filmbildnern, gewöhnlich handelt es sich um Polymere, die in organischen Lösemitteln wie Aceton löslich sind, kann den Hexafluorsilikat auf das Bauteil aufgebracht werden. Sie ergeben nach dem Verdampfen des Lösemittels einen fest haftenden Film. Geeignete Polymere sind beispielsweise Acrylate oder Methacrylate.

Material mit einem feinteiligen Kornspektrum ist besonders gut für die Naßbefluxung geeignet. Material mit einem gröberen Kornspektrum ist besonders gut für die Trockenbefluxung geeignet. Material mit gewünscht feinem bzw. gröberem Kornspektrum kann nach bekannten Methoden erzeugt werden. Üblicherweise setzt man Alkalilauge mit Hexafluorokieselsäure ein (Vorläufer sind auch brauchbar, z. B. Alkalicarbonat). Es ist allgemein bekannt, wie die Korngröße zu beeinflussen ist. Kleinere Kristalle entstehen bei niedriger Reaktionstemperatur, schneller Reaktion, schneller Trocknung und starker Bewegung der Reaktionsmischung. Größere Kristalle entstehen bei höherer Temperatur, Stehenlassen über der Mutterlauge, geringer Bewegung der Reaktionsmischung und langsamer Vermischung der Reaktanten.

Hexafluorsilikat bzw. diese enthaltende Gemische, die im wesentlichen Partikel in einer Korngröße von 8 bis unter
20 µm, z. B. bis zu 18 µm aufweisen, sind sehr gut zur Trockenbefluxung brauchbar. So konnte K₂SiF₆ mit X_{D10} = 2,04 µm, X_{D50} = 6,94 µm und X_{D90} = 12,35 µm und einem mittleren Korndurchmesser von 6,94 µm erzeugt werden. Ein anderes Produkt war noch feiner, mit einer X_{D50} von 4,6 µm. Diese Korngrößenangabe bezieht sich auf den mittleren Korndurchmesser für
50 % der Teilchen (X_{D50}), bestimmt durch Laserbeugung. Flußmittel, welche im wesentlichen Partikel in einem Korngrößenbereich von 1 bis 12,5 µm aufweisen, sind als Aufschlämmung in Wasser oder organischen Flüssigkeiten besonders gut nach dem Naßbefluxungsverfahren aufbringbar.

Es wurde festgestellt, daß Bauteile aus Aluminium oder Aluminiumlegierungen, die erfindungsgemäß mit Alkalimetallhexafluorsilikat beschichtet sind, ohne Lotzusatz verlötet werden können, beispielsweise nach der Methode des Flammlötens oder des Ofenlötens, sofern zwischen Aufbringen der Beschichtung und dem Verlöten nicht so viel Zeit vergangen ist, daß es zu einer Alterung der Oberfläche der zu verlötenden Teile oder Stellen gekommen ist. Ist zwischen dem erfindungsgemäßen Beschichtungsverfahren und dem sich anschließenden Verlötungsverfahren eine solche Zeitspanne vergangen, daß es zu einer Alterung der Oberfläche gekommen ist, kann man ein Flußmittel, beispielsweise auf Basis von Kaliumfluoraluminat oder Cäsiumfluoraluminat, verwenden. Der Vorteil ist, daß gewünschtenfalls eine sehr niedrige Flächenbeladung mit dem Flußmittel, beispielsweise im Bereich von 2 bis 30 g/m², erfolgen kann.

Gemäß einer Ausführungsform verwendet man reines Alkalimetallhexafluorsilikat. Dabei kann es sich um ein Gemisch von Alkalimetallhexafluorsilikaten handeln.

Gemäß einer anderen Ausführungsform kann ein Flußmittel auf Fluoraluminatbasis, beispielsweise Kaliumfluoraluminat und/oder Cäsiumfluoraluminat gleichzeitig mit dem Alkalimetallhexafluorsilikat aufgebracht werden. Das Fluoraluminat liegt in einer Menge von maximal 5 Gew.-%, bezogen auf das eingesetzte Alkalimetallhexafluorsilikat
vor, sofern man gemäß dieser Ausführungsform arbeitet.

Der Begriff "Bauteile aus Aluminium oder Aluminiumlegierung" steht im Rahmen der vorliegenden Erfindung für solche Bauteile, die, wenn sie nach dem erfindungsgemäßen Verfahren beschichtet sind, durch Verlöten zu Ensembeln (Baugruppen) zusammengesetzt werden können. Unter "Bauteile" werden auch Vorfabrikate verstanden, beispielsweise Aluminiumbleche, Aluminiumprofile, Aluminiumrohre oder andere Formen aus Aluminium oder Aluminiumlegierungen, die nach weiterer Bearbeitung zu Bauteilen weiterverarbeitet werden, die ihrerseits dann zu Ensembeln verlötet werden können. Beispielsweise handelt es sich um Bauteile, die nach dem Verlöten Kühler, Wärmetauscher oder Verdampfer ergeben.

Die mit dem erfindungsgemäßen Verfahren hergestellten Bauteile aus Aluminium oder Aluminiumlegierungen können, gegebenenfalls unter Zusatz eines Lötflußmittels wie Kaliumfluoraluminat, Cäsiumfluoraluminat oder deren Gemischen, verlötet werden. Dies erfolgt in an sich bekannter Weise, beispielsweise in einem Lötofen oder durch Flammenlöten bei
einer Temperatur im Bereich von 400 bis 610 °C je nach Flußmittel.

Die Erfindung weist den Vorteil auf, daß die Bauteile, die nach dem erfindungsgemäßen Verfahren erhalten wurden, sofort ohne Zusatz eines Flußmittels verlötet werden können. Sofern man ein Flußmittel für später auszuführende Verlötungen zusetzt, kann man dieses mit einem niedrigen Flächengewicht aufbringen. Die neben der Legierungsschicht sich ausbildende Alkalifluoraluminatschicht schützt wirksam vor Reoxidation.

### Beispiel 1:

### Herstellung eines mit Aluminium-Silicium-Legierung beschichteten Aluminiumbauteils.

Ein Coupon aus Aluminium (Größe: 25x25 mm) wurde mit 40 g/m² K₂SiF₆ belegt und dieses mittels Isopropanol homogen verteilt. Der Coupon wurde nach dem Abdampfen des Lösemittels in einem Ofen unter Stickstoffatmosphäre auf 600 °C erhitzt (CAB-Verfahren = Controlled Atmosphere Brazing). Nach diesem Temperaturzyklus wurde der Coupon nach dem Abkühlen aus dem Ofen genommen. Es hatte sich eine metallisch glänzende Al-Si- Oberfläche auf dem Coupon gebildet.

### Beispiel 2:

### Verlöten von mit Al-Si-Legierung beschichteten Aluminiumbauteilen

Der gemäß Beispiel 1 hergestellte Coupon wurde mit 5 g/m² Kaliumfluoraluminat-Flußmittel (Nocolok^{R}, Warenzeichen der Alcan Corp.; Lieferant: Solvay Fluor und Derivate GmbH) belegt und, unter Zuhilfenahme von Isopropanol, homogen verteilt. Auf dem Coupon wurde dann ein Aluminiumwinkel aufgelegt, das Ensemble in den Lötofen gebracht und erneut wie in Beispiel 1 behandelt.

Nach dem Verlöten wurde der Coupon mit dem Aluminiumwinkel entnommen. Der Winkel war unter Ausbildung einer Lotnaht zu 100 % fest und homogen mit dem Coupon verlötet.

### Beispiel 3 (Vergleichsbeispiel):

### Einstufige Verlötung ohne Lotzusatz

Ein Coupon aus Aluminium (Größe: 25x25) wurde mit 20 g/m² K₂SiF₆ belegt und dieses mittels Isopropanol homogen verteilt. Auf dieser so vorbereiteten Fläche wurde ein 90°-Aluminium-Winkel mit einer Gesamtlänge von 40 mm aufgesetzt. Dieses Ensemble wurde daraufhin in einem Ofen unter Stickstoffatmosphäre auf 600 °C erhitzt (CAB-Verfahren = Controlled Atmosphere Brazing). Nach diesem Temperaturzyklus wurde der Coupon nach dem Abkühlen aus dem Ofen genommen. Es hatte sich eine starke, vollständig umlaufende Lotnaht zwischen beiden Einzelteilen ausgebildet.

## Patentansprüche

1. Verfahren zur Herstellung eines Bauteils aus einem nicht durch Aufwalzen eines Lotmetalls plattiertem Aluminium oder Aluminiumlegierung mit einer Alkalimetällhexafluorsilicat Beschichtung, bestehend aus reinen Alkalimetallhexafluorsilikat, oder einem Gemisch aus Alkalimetallhexafluorsilikat und maximal 5 Gew.- % eines Kalium- und/oder Cesiumfluoraluminats, bezogen auf das eingesetzte Alkalimetallhexafluorsilikat, wobei man das Alkalimetallfluorsilikat mit einem Flächengewicht von 30 bis 60 g/m² nach dem Trocken befluxungsverfahren in Form einer Aufschlämmung in Wasser, oder in organischen Lösungsmitteln oder als Paste auf das Bauteil aufbringt.

2. Verfahren nach Anspruch 1, **dadurch gekennzeichnet, daß** man Kaliumhexafluorsilikat, Cäsiumhexafluorsilikat oder deren Gemische verwendet.

## Claims

1. Process for the preparation of a component from aluminium or an aluminium alloy which is not plated by roller plating with a solder metal, with an alkali metal hexafluorosilicate coating consisting of pure alkali metal hexafluorosilicate or of a mixture of alkali metal hexafluorosilicate and maximally 5 % by weight of a potassium and/or cesium fluoroaluminate, relative to the alkali metal hexafluorosilicate present, wherein the alkali metal hexafluorosilicate is deposited on the component with a weight per unit area of 30 to 60 g/m² according to the dry fluxing process or in the form of a suspension in water or in organic solvents or in the form of a paste.

2. Process according to claim 2 wherein potassium hexafluorosilicate, cesium hexafluorosilicate or their mixtures are used.

## Revendications

1. Procédé de préparation d'une pièce d'aluminium ou d'un alliage d'aluminium non-plaqué par placage par rouleau avec un métal de brasage, avec une revêtement de hexafluorosilicate de métal alcalin constitué de hexafluorosilicate de métal alcalin pur ou un mélange de hexafluorosilicate de métal alcalin et d'un fluoroaluminate de potassium et/ou de cesium, en une quantité de maximum 5 % en poids du hexafluorosilicate de métal alcalin présent, dans lequel le hexafluorosilicate de métal alcalin est déposé sur la pièce selon la méthode à flux sec ou sous la forme d'une suspension dans l'eau ou dans des solvents organiques ou en tant que pâte, avec un grammage de 30 à 60 g/m².

2. Procédé de la revendication 1 **caracterisé en ce qu'**on utilise le hexafluorosilicate de potassium, le hexafluorosilicate de cesium ou leurs mélanges.
